# EUROPEAN PATENT SPECIFICATION

(11) **EP 2 397 297 B1**
(45) Date of publication and mention of the grant of the patent: **20.04.2016**
(21) Application number: 11169979.9
(22) Date of filing: 15.06.2011
(51) Int. Cl.: B28B 13/02, B65D 90/56, F16K 3/03, E04G 21/02

(54) **Method and apparatus for casting concrete product**
Verfahren und Vorrichtung zum Gießen eines Betonprodukts
Procédé et appareil pour mouler un produit de béton

(30) Priority: 15.06.2010 FI 20105684
(43) Date of publication of application: 21.12.2011
(73) Proprietor: Elematic Oyj, 37801 Akaa (FI)
(72) Inventor: Järvinen, Lassi, FI-37600 Valkeakoski (FI)
(74) Representative: Berggren Oy Ab

(56) References cited:
- EP-A1- 0 512 776
- EP-A2- 0 830 926
- EP-A2- 1 762 354
- AU-A- 6 266 169
- DE-A1- 2 757 527
- DE-U1-202007 003 535
- FR-A- 1 280 762
- US-A- 3 695 576

## Description

The invention relates to casting concrete products by mold casting. More specifically, the invention relates to methods and apparatuses for feeding concrete mix to a mold formed on the casting bed.

When manufacturing concrete products by mold casting, the manufacturing process is started by first forming on the casting bed a mold that defines the measures of the product to be cast. Generally this is nowadays carried out by forming the mold on a metallic tiltable casting table of mold sidewall elements that are attached by means of magnets. When the mold defining the external measures of the mold is finished, inside the mold there are, when necessary, respectively formed areas bordered by sidewall elements, for example for windows, doors or other corresponding allocations defining the casting area of the cast product. Moreover, when necessary, various devices are placed on the casting table inside the mold for forming the required allocations, such as cardboard, provided with surface retarder, that is set on the casting table when casting graphic concrete. At the final stage of preparing the mold, it is provided with the necessary reinforcements, whereafter concrete mix is cast in the mold. When casting concrete mix in a mold, it is generally fed from a concrete mix casting equipment proceeding above the mold. With a tilting mold, this casting of concrete mix in a mold is carried out from casting equipment located above the casting table, or brought above the casting table. When casting in a circulating mold line, a moving casting mold is generally brought to a vibrating station, which vibrating station is provided with casting equipment, and where the casting of concrete mix in a mold is carried out.

Possibly already during the casting of concrete mix, and not later than after the concrete mix has been cast in the mold, the mold filled with concrete mix is vibrated for compacting the concrete mix, and for ensuring that the mold is properly filled. With tilting molds, said vibration is realized for example by means of vibrators arranged in the casting table legs, and with a circulating mold line, in a vibrating station, where the concrete mix is cast in a mold, said vibrating station being provided with vibrators for vibrating the casting mold.

The concrete mix used in mold casting can be for example regular or self-compacting concrete. Various different color concrete mixtures can also be used as part of the element to be cast, or when necessary, the whole element can be cast in color concrete in order to obtain a desired color for the concrete to be cast.

With a tilting mold, after the cast concrete product has cured, the product is removed from the casting mold by removing part of the mold, by tilting the casting table and by lifting the product away from the casting table by means of lifting lugs or ears provided in the product. In a circulating mold line, the mold is transferred to a separate tilting station for removing the cast product from the mold.

The patent publication EP 0 512 776 specifies an apparatus used for casting concrete in a mold, where concrete mix is fed in a casting mold from a casting apparatus moving above the mold, said apparatus comprising a concrete mix storage tank and a nozzle connected thereto. The casting arrangement also comprises a vibrator for fluidizing the concrete mix to be cast prior to casting the concrete mix in the mold. In the arrangement described in said publication, the nozzle element is connected to the bottom of the concrete mix storage tank, and the nozzle unit is opened or closed, for respectively starting or ending the feeding of concrete mix, by a shutter element that is moved vertically by intermediation of a rod extending through the interiors of the nozzle element and the concrete mix storage tank. The publication also describes a bellows-type arrangement for adjusting the mass flow proceeding through the nozzle, in which a bellows system provided inside the nozzle can, when necessary, be used for reducing the inner diameter of the nozzle by filling the bellows with for example pressurized air or oil.

AU 62661 69 A discloses the preambles of method claims 1 and 2 and the preambles of apparatus claims 3-5.

The drawback with prior art solutions is, however, that with them, it is very difficult to efficiently fill the narrow gaps left in the casting mold.

According to the present invention, as defined in the appended claims the casting arrangement is provided with an adjustable casting opening, i.e. an aperture for adjusting the outer dimensions of the mass flow fed in the mold from the casting apparatus, said casting opening forming part of the adjustable casting duct. Thus the outer dimensions of the concrete mix mass flow to be fed in the mold from the casting apparatus can be efficiently adjusted to be suitable with respect to the various different narrow spots and borders existing in the mold.

In this connection, the term "casting opening" refers to the aperture through which the concrete mix exits from the casting apparatus when feeding concrete mix in a casting mold.

According to the invention, the adjusting of the casting opening can be realized by adjusting the cross-section of the whole casting duct in the casting apparatus, so that also the cross-section of the casting opening is adjusted respectively.

In this connection, the term "casting duct" refers to the duct connecting the concrete mix container of the casting apparatus to the casting opening of the casting apparatus.

The adjusting of the casting duct according to the invention is realized by means of a surface that is adjustable in a imbricating fashion, constituting the inner surface of the casting duct, or alternatively by means of an elastic cover provided on top of the adjustable support frame or attached to said support frame. Now the adjusting of the casting opening is realized without any counter flanks created in the casting duct, i.e. the diameter of the casting duct is not reduced along the length of the casting duct.

More precisely, the method according to the invention is characterized by what is set forth in the characterizing part of claim 1 or 2, and the apparatus according to the invention is characterized by what is set forth in the characterizing part of claim 3 or 4 or 5.

The invention is explained in more detail exemplarily below, with reference to the appended drawings, where
Figures 1A and 1B are schematical illustrations of a casting apparatus according to the invention, provided with an adjustable casting opening and a casting duct,
Figures 2A and 2B are schematical illustrations of an alternative embodiment of the casting apparatus according to the invention, and
Figures 3A and 3B are schematical illustrations of the nozzle element forming the adjustable casting duct in the casting apparatus according to the invention, viewed in cross-section.

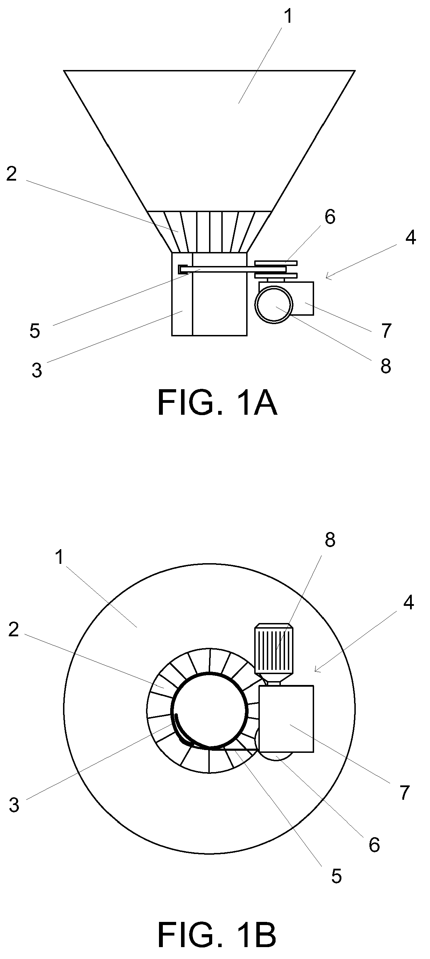

Figures 1A and 1B illustrate a casting apparatus provided with an adjustable casting opening and casting duct according to the invention. Figure 1A shows the casting apparatus in side view, and Figure 1 B shows the same casting apparatus as viewed from below.

The casting apparatus illustrated in Figures 1A and 1B comprises a concrete mix container 1, the lower part 2 of said concrete mix container being made of a flexible material or structure. To the lower part 2 of the concrete mix container 1, there is connected a nozzle element 3 with an adjustable cross-section, said nozzle element constituting the casting duct of the casting apparatus. Moreover, the casting apparatus comprises means 4 for adjusting the cross-section of the nozzle element.

While using the casting apparatus, the prepared concrete mix is first brought in the concrete mix container 1 of the apparatus, from where it is conducted, when casting concrete mix, to a nozzle element 3, and further through a casting opening defined thereby, to the mold of the concrete product to be cast. During the casting process, the casting apparatus is moved above the casting mold for guiding the concrete mix to the correct spots in the casting mold, and in order to ensure that the casting mold is filled correctly. By altering the diameter of the adjustable nozzle element 3 and the diameter of the casting opening defined there by, the mass flow of the concrete mix fed from the casting apparatus is adjusted to be suitable with respect to the different parts of the mold.

In this alternative the adjusting of the casting opening and casting duct according to the invention is achieved by an adjustable cross-section of the nozzle element 3 of the casting apparatus. The nozzle element 3 is made of a surface or plate that is bent in a cylindrical shape, so that the facing surfaces are partly arranged in a imbricating fashion. When the edges are placed in a imbricating fashion like this, it is possible to adjust the diameter of the cylindrical surface formed by the nozzle element 3. The proper adjusting of the diameter of the nozzle element 3, and particularly the adjusting of the casting duct and casting opening defined by the inner diameter thereof, is realized by adjusting means 4, which in this example comprise a belt 5 attached in the region of the topmost edge of the imbricating cylindrical surface, a reel 6 for adjusting the length of the belt 5, and a gear system 7 and an electric motor 8 for rotating the reel.

When adjusting the cross-section of the nozzle element 3, i.e. the casting duct, and thus the casting opening of the casting apparatus, the length of the belt 5 adjusted by rotating the reel 6. The cylindrical surface forming the nozzle element 3 is attached to the casting apparatus so that the innermost of the imbricating edges of the surface is permanently fastened to the casting apparatus along the length of said edge, and the outermost of the imbricating edges is free to slide along the surface of the cylinder. When the casting opening is extended by extending the belt 5, the extending diameter of the nozzle 3 is realized by the spring force of the surface forming the nozzle element 3 and the hydrostatic pressure of the concrete mixture to be fed in the mold.

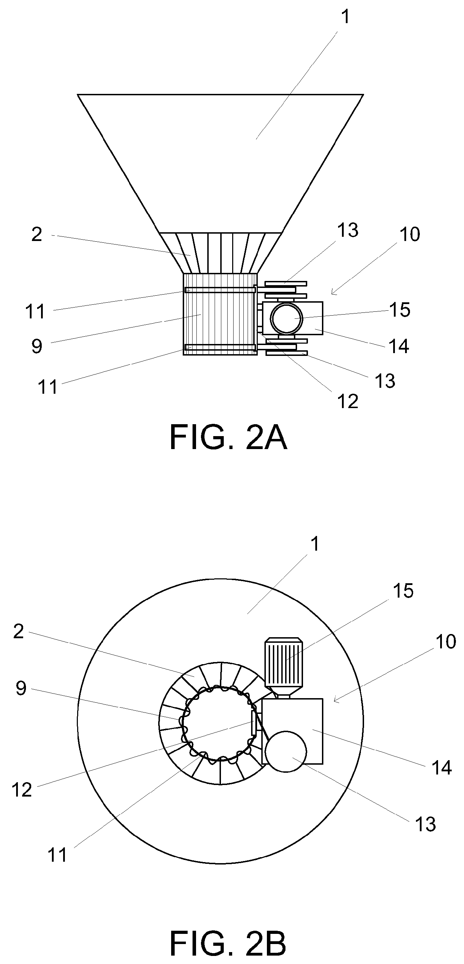

Figures 2A and 2B illustrate an alternative of the casting apparatus according to the invention. Figure 2A shows the casting apparatus as viewed from the side, and Figure 2B shows the same casting apparatus as viewed from below. In the same way as in the embodiments of Figures 1A and 1B, the casting apparatus illustrated in Figures 2A and 2B comprises a concrete mix container 1, the lower part 2 of said container being made of a flexible material or structure. To the lower part 2 of the concrete mix container 1, there is connected a nozzle element 9 with an adjustable cross-section, said nozzle element constituting the casting duct of the casting apparatus. Moreover, the casting apparatus comprises means 10 for adjusting the cross-section of the nozzle element 9.

In the embodiment of Figures 2A and 2B, the nozzle element 9 forming the casting duct and the casting opening is made of crinkled or corrugated material, where the crinkled or corrugated shape of the material facilitates the adjusting of the cross-section of the nozzle element 9, and hence also the adjusting of the outer dimensions of the mass flow of the concrete mix passing therethrough.

The adjusting of the cross-section of the nozzle element 9 is made possible by belts 11 circulating the nozzle element along with the nozzle material, said belts 11 passing through the corrugations provided in the nozzle element material. First ends of the belts 11 are attached to a support element 12, and the other ends are attached to the reels 13. The support element 12 is permanently fastened to the structure of the casting arrangement. The cross-section of the nozzle element 9, i.e. the cross-section of the casting duct of the casting apparatus, as well as the casting opening, is adjusted by extending or shortening the length of the belts 11 by rotating the reels 13, said reels being driven by intermediation of a gear system 14 and an electric motor 15.

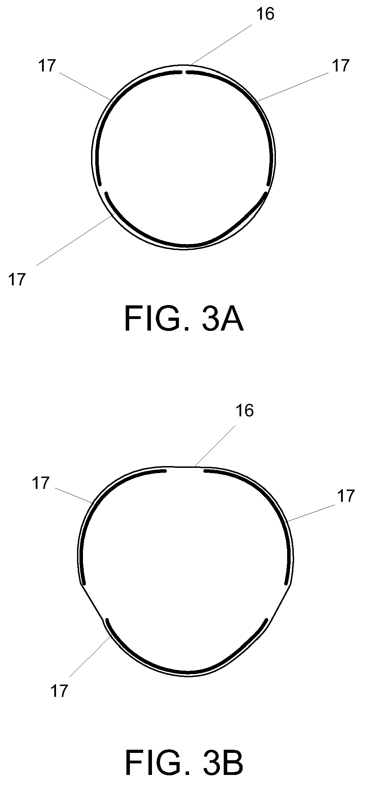

Figures 3A and 3B illustrate a nozzle element forming the adjustable casting duct to be used in the casting apparatus according to the invention, shown in cross-section. In this alternative the nozzle element comprises a cover or surface 16 made of elastic material, and an adjustable support frame 17 of the nozzle element.

In the alternative of Figures 3A and 3B, the elastic cover 16 is set around a support frame 17 formed of three pieces. In the case of Figure 3A, the pieces of the support frame 17 are substantially in mutual contact, so that the cross-section of the casting duct formed by the nozzle element is at its smallest.

In the case of Figure 3B, the pieces of the support frame 17 are pulled radially outwards with respect to the center axis of the casting duct, so that the cross-section of the casting duct of the nozzle element has increased. Now the elastic cover 16 is respectively extended, thus maintaining the integrated surface of the casting duct.

In this alternative the pieces of the support frame 17 can be attached to the driving means for example through the top or bottom edge of the nozzle element, or through apertures formed to the elastic material at the location of the pieces of the support frame 17.

With all alternatives described in the above drawings, there is achieved a solution according to the invention, where the adjusting of the casting opening can be realized without counter flanks being formed in the casting duct, which flanks may result for example in an arching of the cast concrete mix, and thus in blocking the mass flow. Here the term "counter flank" refers to surfaces that are formed in the casting duct and tend to contract at the point of adjusting the casting duct and to further extend after the point of adjusting.

## Claims

1. Method for casting a concrete product by casting in a mold, in which method concrete mix is fed in a casting mold from a casting apparatus provided with a mix container having a lower part made of flexible material or structure and a nozzle element constituting the casting duct of the casting apparatus connected to the lower part (2) of the concrete mix container (1), said apparatus being moved above the mold, **characterized in that**
the outer dimensions of the cross-section of the concrete mix mass flow fed from the casting apparatus to the mold are adjusted, by adjusting the cross-section of the whole length of the casting duct constituted by the nozzle element (3, 9, 16) of the casting apparatus without formation of counter flanks in the casting duct and that the adjusting of the cross-section of the casting apparatus nozzle is realized by moving the edges, set in a imbricating fashion, of the surface (3) forming the nozzle, with respect to each other.

2. Method for casting a concrete product by casting in a mold, in which method concrete mix is fed in a casting mold from a casting apparatus provided with a mix container having a lower part (2) made of flexible material or structure and a nozzle element constituting the casting duct of the casting apparatus connected to the lower part of the concrete mix container 81), said apparatus being moved above the mold, **characterized in that**
the outer dimensions of the cross-section of the concrete mix mass flow fed from the casting apparatus to the mold are adjusted, by adjusting the cross-section of the whole length of the casting duct constituted by the nozzle element (3, 9, 16) of the casting apparatus without formation of counter flanks in the casting duct that the adjusting of the cross-section of the casting apparatus nozzle is realized by means of the flexible quality of the corrugated material forming the nozzle (9).

3. An apparatus for casting a concrete product in a mold, said apparatus comprising a concrete mix container (1) provided with a lower part (2) made of flexible material or structure to be moved above the casting mold and a nozzle (3, 9, 16) connected to the lower part of the mix container for feeding concrete mix from the concrete container in a casting mold, said nozzle being provided with means (4, 10, 17) for adjusting the casting opening of the apparatus in order to adjust the outer dimensions of the cross-section of the mass flow of the concrete mix to be fed in the mold, wherein
the means for adjusting the casting opening comprise means (4, 10, 17) for adjusting the cross-section of the whole length of the casting duct constituted by the nozzle element (3, 9, 16) of the casting machine without formation of counter flanks in the casting duct, **characterized in that**
the means for adjusting the casting duct cross-section comprise a surface (3) forming a nozzle, the edges of said surface being set in a mutually imbricating fashion, and movably with respect to each other.

4. An apparatus for casting a concrete product in a mold, said apparatus comprising a concrete mix container (1) provided with a lower part (2) made of flexible material or structure to be moved above the casting mold and a nozzle (3, 9, 16) connected to the lower part of the mix container for feeding concrete mix from the concrete container in a casting mold, said nozzle being provided with means (4, 10, 17) for adjusting the casting opening of the apparatus in order to adjust the outer dimensions of the cross-section of the mass flow of the concrete mix to be fed in the mold, wherein
the means for adjusting the casting opening comprise means (4, 10, 17) for adjusting the cross-section of the whole length of the casting duct constituted by the nozzle element (3, 9, 16) of the casting machine without formation of counter flanks in the casting duct, **characterized in that** the means for adjusting the casting duct cross-section comprise a surface (9) forming a nozzle, said surface being formed of corrugated material.

5. An apparatus for casting a concrete product in a mold, said apparatus comprising a concrete mix container (1) provided with a lower part (2) made of flexible material or structure to be moved above the casting mold and a nozzle (3, 9, 16) connected to the lower part of the mix container for feeding concrete mix from the concrete container in a casting mold, said nozzle being provided with means (4, 10, 17) for adjusting the casting opening of the apparatus in order to adjust the outer dimensions of the cross-section of the mass flow of the concrete mix to be fed in the mold, wherein
the means for adjusting the casting opening comprise means (4, 10, 17) for adjusting the cross-section of the whole length of the casting duct constituted by the nozzle element (3, 9, 16) of the casting machine without formation of counter flanks in the casting duct, **characterized in that**
the means for adjusting the casting duct cross-section comprise a surface (16) being formed of elastic material forming a nozzle comprising a support frame (17) attached to elastic material (16) and/or arranged on the inner surface of elastic material, and that by moving said support frame, the cross-section of the casting duct formed by the nozzle can be adjusted.

6. Apparatus according to any of the claims 3-5, **characterized in that** the means for adjusting the casting duct cross-section comprise actuators (4, 10) for altering the cross-section of the surface forming the casting duct.

## Patentansprüche

1. Verfahren zum Gießen eines Betonprodukts durch Gießen in eine Form, wobei bei dem Verfahren eine Betonmischung in eine Gießform eingefüllt wird, aus einer Gießvorrichtung, versehen mit einem Mischungsbehälter, der einen aus einem flexiblen Material oder einer flexiblen Struktur hergestellten unteren Teil aufweist, und einem den Gießkanal der Gießvorrichtung bildenden Düsenelement, das mit dem unteren Teil (2) des Betonmischungsbehälters (1) verbunden ist, wobei die Vorrichtung über der Form bewegt wird, **dadurch gekennzeichnet, dass** die Außenabmessungen des Querschnitts des Betonmischungs-Massenstroms, der aus der Gießvorrichtung in die Form eingefüllt wird, durch Einstellen des Querschnitts der gesamten Länge des Gießkanals, der durch das Düsenelement (3, 9, 16) der Gießvorrichtung gebildet wird, ohne Bildung von Gegenflanken in dem Gießkanal eingestellt werden, und dass das Einstellen des Querschnitts der Düse der Gießvorrichtung durch Bewegen der in einer einander übergreifenden Weise festgelegten Kanten der die Düse bildenden Fläche (3) in Bezug aufeinander realisiert wird.

2. Verfahren zum Gießen eines Betonprodukts durch Gießen in eine Form, wobei bei dem Verfahren eine Betonmischung in eine Gießform eingefüllt wird, aus einer Gießvorrichtung, versehen mit einem Mischungsbehälter, der einen aus einem flexiblen Material oder einer flexiblen Struktur hergestellten unteren Teil (2) aufweist, und einem den Gießkanal der Gießvorrichtung bildenden Düsenelement, das mit dem unteren Teil des Betonmischungsbehälters (1) verbunden ist, wobei die Vorrichtung über der Form bewegt wird, **dadurch gekennzeichnet, dass** die Außenabmessungen des Querschnitts des Betonmischungs-Massenstroms, der aus der Gießvorrichtung in die Form eingefüllt wird, durch Einstellen des Querschnitts der gesamten Länge des Gießkanals, der durch das Düsenelement (3, 9, 16) der Gießvorrichtung gebildet wird, ohne Bildung von Gegenflanken in dem Gießkanal eingestellt werden, und dass das Einstellen des Querschnitts der Düse der Gießvorrichtung mithilfe der flexiblen Qualität des die Düse (9) bildenden gewellten Materials realisiert wird.

3. Vorrichtung zum Gießen eines Betonprodukts in eine Form, wobei die Vorrichtung einen Betonmischungsbehälter (1) umfasst, der mit einem aus einem flexiblen Material oder einer flexiblen Struktur hergestellten über der Gießform zu bewegenden unteren Teil (2) und einer Düse (3, 9, 16) versehen ist, die mit dem unteren Teil des Mischungsbehälters verbunden ist, um eine Betonmischung aus dem Betonbehälter in eine Gießform einzufüllen, wobei die Düse mit Mitteln (4, 10, 17) zum Einstellen der Gießöffnung der Vorrichtung versehen ist, um die Außenabmessungen des Querschnitts des Massenstroms der in die Form einzufüllenden Betonmischung einzustellen, wobei die Mittel zum Einstellen der Gießöffnung Mittel (4, 10, 17) zum Einstellen des Querschnitts der gesamten Länge des Gießkanals, der von dem Düsenelement (3, 9, 16) der Gießmaschine gebildet wird, ohne Bildung von Gegenflanken in dem Gießkanal umfassen, **dadurch gekennzeichnet, dass** die Mittel zum Einstellen des Gießkanal-Querschnitts eine Fläche (3) umfassen, die eine Düse bildet, wobei die Kanten der Fläche in einer einander übergreifenden Weise und in Bezug auf einander bewegbar festgelegt sind.

4. Vorrichtung zum Gießen eines Betonprodukts in eine Form, wobei die Vorrichtung einen Betonmischungsbehälter (1) umfasst, der mit einem aus einem flexiblen Material oder einer flexiblen Struktur hergestellten über der Gießform zu bewegenden unteren Teil (2) und einer Düse (3, 9, 16) versehen ist, die mit dem unteren Teil des Mischungsbehälters verbunden ist, um eine Betonmischung aus dem Betonbehälter in eine Gießform einzufüllen, wobei die Düse mit Mitteln (4, 10, 17) zum Einstellen der Gießöffnung der Vorrichtung versehen ist, um die Außenabmessungen des Querschnitts des Massenstroms der in die Form einzufüllenden Betonmischung einzustellen, wobei die Mittel zum Einstellen der Gießöffnung Mittel (4, 10, 17) zum Einstellen des Querschnitts der gesamten Länge des Gießkanals, der von dem Düsenelement (3, 9, 16) der Gießmaschine gebildet wird, ohne Bildung von Gegenflanken in dem Gießkanal umfassen, **dadurch gekennzeichnet, dass** die Mittel zum Einstellen des Gießkanal-Querschnitts eine Fläche (9) umfassen, die eine Düse bildet, wobei die Fläche aus gewelltem Material gebildet ist.

5. Vorrichtung zum Gießen eines Betonprodukts in eine Form, wobei die Vorrichtung einen Betonmischungsbehälter (1) umfasst, der mit einem aus einem flexiblen Material oder einer flexiblen Struktur hergestellten über der Gießform zu bewegenden unteren Teil (2) und einer Düse (3, 9, 16) versehen ist, die mit dem unteren Teil des Mischungsbehälters verbunden ist, um eine Betonmischung aus dem Betonbehälter in eine Gießform einzufüllen, wobei die Düse mit Mitteln (4, 10, 17) zum Einstellen der Gießöffnung der Vorrichtung versehen ist, um die Außenabmessungen des Querschnitts des Massenstroms der in die Form einzufüllenden Betonmischung einzustellen, wobei die Mittel zum Einstellen der Gießöffnung Mittel (4, 10, 17) zum Einstellen des Querschnitts der gesamten Länge des Gießkanals, der von dem Düsenelement (3, 9, 16) der Gießmaschine gebildet wird, ohne Bildung von Gegenflanken in dem Gießkanal umfassen, **dadurch gekennzeichnet, dass** die Mittel zum Einstellen des Gießkanal-Querschnitts eine Fläche (16) umfassen, die aus einem elastischen Material gebildet ist, das eine Düse bildet, die einen Stützrahmen (17) umfasst, der an dem elastischen Material (16) befestigt und/oder auf der Innenfläche aus elastischem Material angeordnet ist, und dass durch Bewegen des Stützrahmens der Querschnitt des Gießkanals, der durch die Düse gebildet wird, eingestellt werden kann.

6. Vorrichtung nach einem der Ansprüche 3 bis 5, **dadurch gekennzeichnet, dass** die Mittel zum Einstellen des Gießkanal-Querschnitts Aktuatoren (4, 10) zum Ändern des Querschnitts der den Gießkanal bildenden Fläche umfassen.

## Revendications

1. Procédé pour la coulée d'un produit de béton par coulée dans un moule, ledit procédé comprenant l'alimentation d'un mélange de béton dans un moule de coulée par un dispositif de coulée doté d'un récipient de mélange présentant une partie inférieure constituée d'un matériau ou d'une structure souple et un élément de buse formant un conduit de coulée du dispositif de coulée relié à la partie inférieure (2) du récipient de mélange de béton (1), ledit dispositif étant déplacé au-dessus du moule, **caractérisé en ce que** les dimensions extérieures de la section transversale du débit massique de mélange de béton alimenté du dispositif de coulée vers le moule sont réglées, par réglage de la section transversale de toute la longueur du conduit de coulée formé par l'élément de buse (3, 9, 16) du dispositif de coulée sans apparition de contre-flancs dans le conduit de coulée, et **en ce que** le réglage de la section transversale de la buse du dispositif de coulée est réalisé en déplaçant les bords placés d'une façon imbriquée de la surface (3) formant la buse, les uns par rapport aux autres.

2. Procédé pour la coulée d'un produit de béton par coulée dans un moule, ledit procédé comprenant l'alimentation d'un mélange de béton dans un moule de coulée à partir d'un dispositif de coulée doté d'un récipient de mélange présentant une partie inférieure (2) constituée d'un matériau ou d'une structure souple et un élément de buse formant le conduit de coulée du dispositif de coulée relié à la partie inférieure du récipient de mélange de béton (1), ledit dispositif étant déplacé au-dessus du moule, **caractérisé en ce que** les dimensions extérieures de la section transversale du débit massique de mélange de béton alimenté du dispositif de coulée vers le moule sont réglées, par réglage de la section transversale de toute la longueur du conduit de coulée formé par l'élément de buse (3, 9, 16) du dispositif de coulée sans apparition de contre-flancs dans le conduit de coulée, et **en ce que** le réglage de la section transversale de la buse du dispositif de coulée est réalisé grâce à la nature souple du matériau ondulé formant la buse (9).

3. Dispositif pour la coulée d'un produit de béton dans un moule, ledit dispositif comprenant un récipient de mélange de béton (1) doté d'une partie inférieure (2) constituée d'un matériau ou d'une structure souple, destinée à être déplacée au-dessus du moule de coulée, et une buse (3, 9, 16) reliée à la partie inférieure du récipient de mélange pour alimenter le mélange de béton à partir du récipient de béton dans un moule de coulée, ladite buse étant dotée de moyens (4, 10, 17) pour le réglage de l'ouverture de coulée du dispositif, permettant de régler les dimensions extérieures de la section transversale du débit massique du mélange de béton à alimenter dans le moule, dans lequel les moyens pour le réglage de l'ouverture de coulée comprennent des moyens (4, 10, 17) pour le réglage de la section transversale de toute la longueur du conduit de coulée formé par l'élément de buse (3, 9, 16) du dispositif de coulée sans apparition de contre-flancs dans le conduit de coulée, **caractérisé en ce que** les moyens pour le réglage de la section transversale du conduit de coulée comprennent une surface (3) formant une buse, les bords de ladite surface étant placés de façon réciproquement imbriquée et déplaçables les uns par rapport aux autres.

4. Dispositif pour la coulée d'un produit de béton dans un moule, ledit dispositif comprenant un récipient de mélange de béton (1) doté d'une partie inférieure (2) constituée d'un matériau ou d'une structure souple, destinée à être déplacée au-dessus du moule de coulée, et une buse (3, 9, 16) reliée à la partie inférieure du récipient de mélange pour alimenter le mélange de béton à partir du récipient de béton dans un moule de coulée, ladite buse étant dotée de moyens (4, 10, 17) pour le réglage de l'ouverture de coulée du dispositif, permettant de régler les dimensions extérieures de la section transversale du débit massique du mélange de béton à alimenter dans le moule, dans lequel les moyens pour le réglage de l'ouverture de coulée comprennent des moyens (4, 10, 17) pour le réglage de la section transversale de toute la longueur du conduit de coulée formé par l'élément de buse (3, 9, 16) du dispositif de coulée sans apparition de contre-flancs dans le conduit de coulée, **caractérisé en ce que** les moyens pour le réglage de la section transversale du conduit de coulée comprennent une surface (9) formant une buse, ladite surface étant constituée d'un matériau ondulé.

5. Dispositif pour la coulée d'un produit de béton dans un moule, ledit dispositif comprenant un récipient de mélange de béton (1) doté d'une partie inférieure (2) constituée d'un matériau ou d'une structure souple, destinée à être déplacée au-dessus du moule de coulée, et une buse (3, 9, 16) reliée à la partie inférieure du récipient de mélange pour alimenter le mélange de béton à partir du récipient de béton dans un moule de coulée, ladite buse étant dotée de moyens (4, 10, 17) pour le réglage de l'ouverture de coulée du dispositif, permettant de régler les dimensions extérieures de la section transversale du débit massique du mélange de béton à alimenter dans le moule, dans lequel les moyens pour le réglage de l'ouverture de coulée comprennent des moyens (4, 10, 17) pour le réglage de la section transversale de toute la longueur du conduit de coulée formé par l'élément de buse (3, 9, 16) du dispositif de coulée sans apparition de contre-flancs dans le conduit de coulée, **caractérisé en ce que** les moyens pour le réglage de la section transversale du conduit de coulée comprennent une surface (16) constituée d'une matière élastique formant une buse comprenant un cadre de support (17) relié au matériau élastique (16) et/ou disposé sur la surface intérieure de la matière élastique, et **en ce que** la section transversale du conduit de coulée formé par la buse peut être réglée en déplaçant ledit cadre de support.

6. Dispositif selon l'une quelconque des revendications 3-5, **caractérisé en ce que** les moyens pour le réglage de la section transversale du conduit de coulée comprennent des actionneurs (4, 10) permettant de modifier la section transversale de la surface formant le conduit de coulée.
